# EUROPÄISCHE PATENTSCHRIFT

(11) **EP 0 834 474 B1**
(45) Veröffentlichungstag und Bekanntmachung des Hinweises auf die Patenterteilung: **23.07.2003**
(21) Anmeldenummer: 97113803.7
(22) Anmeldetag: 09.08.1997
(51) Int. Cl.: C02F 3/12, C02F 11/00

(54) **Verfahren zur diskontinuierlichen Abwasserreinigung und Anlage zur Durchführung dieses Verfahrens**
Process for the discontinuous purification and installation for carrying out this process
Procédé de purification en discontinu et installation pour la mise en oeuvre de ce procédé

(30) Priorität: 02.10.1996 DE 19640762
(43) Veröffentlichungstag der Anmeldung: 08.04.1998
(73) Patentinhaber: Holm, Niels, Dr., 32427 Minden (DE)
(72) Erfinder: Holm, Niels, Dr., 32427 Minden (DE)
(74) Vertreter: Tönnies, Jan G.

(56) Entgegenhaltungen:
- EP-A- 0 545 557
- DE-A- 4 332 815
- DE-A- 19 519 742
- US-A- 5 395 527

## Beschreibung

Die Erfindung betrifft ein Verfahren zur diskontinuierlichen Abwasserreinigung, das allgemein als "SBR-Verfahren" bezeichnet wird. Die Erfindung betrifft weiter eine Abwasserreinigungsanlage für die Durchführung des erfindungsgemäßen Verfahrens.

Inbesondere wird eine Abwasserreinigungsanlage beschrieben mit einem Rohabwasserzulauf, ggf. einer mechanischen Reinigungsstufe, einem multifunktionalen (d. h. ggf. auch als (vorversäuerndes) Vorklärbecken zu nutzendes) Pufferbecken, zumindest einem Pufferbecken und einer biologischen Stufe bestehend aus zumindest einem biologischem Reaktor, wobei der Rohabwasserzulauf in das Pufferbecken führt und aus dem Pufferbecken die biologischen Reaktoren schubweise (also diskontinuierlich) beschickt werden, versehen ist.

Aus der US 5,395,527 ist ein Verfahren und eine Vorrichtung zur Abwasserbehandlung beschrieben, in der eine Abwasserreinigungsanlage mit einem Rohabwasserzulauf und einer mit einer Umwälzeinrichtung versehenen Pufferstufe beschrieben ist, wobei die Pufferstufe aus einem mit Beschickungspumpen versehenen Pufferbecken besteht, und eine Reaktorstufe mit einem SBR-Reaktor versehen ist. Bei dieser Anlage wird mit dem beschriebenen Vorgehen nicht sehr weitgehende Denitrifikation und Phosphat-Elimination erreicht. Weiter sind die Betriebskosten durch Minimierung der Energiekosten zu verringern.

Das Pufferbecken dient dabei als Vorlage/Misch- und Ausgleichsbehälter für die biologischen Reaktoren (im weiteren SBR-Reaktoren genannt). Im Pufferbecken befinden sich ein oder mehrere Rührer, die, wenn sie in Betrieb sind, die absetzbaren Bestandteile des Rohabwassers bzw. die abfiltrierbaren Stoffe (= TS₀) in Schwebe bringen. Zu definierten Zeiten fördern Pumpen das Abwasser aus dem Pufferbecken in die SBR-Reaktoren.

In den SBR-Reaktoren finden die nachfolgenden Behandlungsschritte nacheinander, einander jedoch teilweise überlappend, statt, womit sich insgesamt folgender Verfahrenszyklus ergibt:

Zu Beginn der Befüllphasen erfolgt die Abwasserzuführung aus dem Pufferbecken vorzugsweise ohne Belüftung des bzw. der SBR-Reaktoren. Die Umwälzung in den Reaktoren wird gleichzeitig angefahren und kann wahlweise zwischenzeitlich ausgestellt werden, wird dann jedoch vorzugsweise vor dem Ende der Beschickungsphase wieder angefahren.

Mit der schubweisen Abwasserbeschickung entsteht in den Reaktoren eine im Vergleich zu kontinuierlichen Verfahren höhere BSB₅ (= biologischer Sauerstoffbedarf) / CSB (= chemischer Sauerstoffbedarf) - Konzentration, die eine schnelle Denitrifikation (Nitrat wird mikrobiell zu gasförmigem Stickstoff reduziert) sowie eine gleichzeitig/anschließend mehr oder weniger effektive Rücklösung von mikrobiologisch fixiertem Phosphat bewirkt.

Die Dauer der Umwälzung in den SBR-Reaktoren ohne Belüftung wird von der erforderlichen Dauer der Denitrifikationszeit sowie ggf. anaeroben Phase zur biologischen Phosphat-Rücklösung bestimmt und übertrifft vorzugsweise die Beschickungsdauer. Am Ende der reinen Mischphase ist der für die Denitrifikation und biologischen Phosphat-Rücklösung erforderliche BSB₅-Anteil anoxisch veratmet worden bzw. im Rahmen der biologischen Phosphat-Elimination als Kohlenstoffspeicher in die Zellen eingelagert worden. Der übrige BSB₅-Anteil wird teilweise von den Belebtschlammflocken adsorbiert und/oder auch teilweise von den fakultativ anaeroben Bakterien anaerob fermentiert.

Während der sich anschließenden Phase der Belüftung erfolgt die oxische Veratmung des restlichen organischen Bestandteile und die Stickstoffoxidation, d. h. die mikrobiologisch katalysierte Oxidation des Ammoniums zu Nitrat. Diese Belüftungsphase verläuft im allgemeinen (abhängig von dem Schlammalter und der Temperatur) bis zur vollständigen Nitrifikation. Aufgrund der im Vergleich zu kontinuierlichen Verfahren höheren Ammonium-Konzentration am Anfang der Belüftungsphase(n) ist die Nitrifikationsrate bei derart betriebenen SBR-Anlagen deutlich höher als bei kontinuierlich betriebenen Anlagen. Gleichzeitig erfolgt während dieser Phase die mikrobiell induzierte über den normalen physiologischen Bedarf hinausgehende Aufnahme des im Abwasser befindlichen Orthophosphates. Dieser Prozeß verläuft gegenläufig zur Phosphat-Rücklösung während der Befüll- und Mischphase und ist direkt abhängig davon, weil die Aufnahmerate um so höher ausfällt je höher die Rücklöserate ist.

Diese drei Phasen können im Verlaufe eines Gesamtzyklus mehrmals hintereinander in Form von internen Zyklen ablaufen. Als Volumenaustauschverhältnis wird dabei das Verhältnis von zugeführter Abwassermenge während eines Gesamtzyklus bzw. eines internen Zyklus zum Volumen des SBR-Reaktors bei Vollfüllung definiert.

Am Ende der (letzten) Belüftungsphase werden alle Aggregate des betreffenden SBR-Reaktors abgeschaltet, um das gereinigte Abwasser von den Belebtschlammflocken zu trennen. Ohne Abwasserzulauf und beweglichen Nachklärbeckeneinrichtungen erfolgt sodann unter idealen hydraulischen Bedingungen die Sedimentation der Belebtschlammflocken.

Mit einem Dekanter (= Klarwasserabzugsvorrichtung) wird das gereinigte Abwasser ca. 1 Stunde nach Beginn der Sedimentationsphase abgezogen.

Am Ende des Gesamtzyklus, d. h. nach dem Klarwasserabzug wird der Überschußschlamm abgezogen.

Bei den aus der Literatur (vgl. z. B. die Patente US 5 395 527, US 5 205 936, US 5 021 161) bekannten Ausführungsformen des oben erläuterten SBR-Verfahrens und aller bisherigen Modifikationen dazu ergeben sich hinsichtlich der Gesamtstickstoffeleminationsraten (Nitrifikation und Denitrifikation) sowie der Raten der biologischen Phosphat-Elimination (P-Elimination) zwei generelle Begrenzungen:

Die Denitrifikationskapazität ist bestenfalls (wenn die Denitrifikation während der Befüll- und Mischphase(n) vollständig verläuft) direkt umgekehrt proportional zum Volumenaustauschverhältnis.

Falls es beispielsweise nur einen internen Zyklus mit einem Volumenaustauschverhältnis von 30 % gibt, beträgt die Denitrifikationskapazität max. 70 %. Diese Problematik der aus prinzipiellen Gründen begrenzten Denitrifikationskapazität herkömmlicher SBR-Verfahren ist analog zur begrenzten Denitrifikationskapazität bei kontinuierlich betriebenen Anlagen mit vorgeschalteter Denitrifikation; hier ist die Denitrifikationskapazität proportional zur internen Rezirkulationsrate.

Falls bei dem obigen Beispiel im Zulauf der nitrifizierbare Stickstoffanteil bei 60 mg/l liegt, beträgt die Nitratkonzentration am Zyklusende (d. h. im Klarwasserablauf) somit 18 mg/l. Das ist ein unakzeptabel hoher Ablaufwert.

Eine hohe Nitratkonzentration am Zyklusende ist auch deshalb sehr problematisch, weil dann (unkontrollierbare, im wesentlichen von der endogenen Atmungskapazität abhängige) Denitrifikationsvorgänge mit der Folge einer N₂-Ausgasung während der Sedimentations- und Dekantierphase zu einem Auftrieb von Belebtschlammflocken führen kann, die dann über den Dekanter in den Vorfluter gelangten würden.

Versuche, die Gesamtstickstoffeliminationsraten dadurch zu erhöhen, daß während der Belüftungsphase simultan denitrifiziert wird (vgl. z. B. WO 95/24 361 und US 5 013 441), sind steuerungs-/regelungstechnisch sehr problematisch und beinhalten die große Gefahr der positiven Selektionierung von mikroaerophilen, fadenförmigen Bakterien, was wiederum die Schlammabsetzeigenschaft verschlechtert und zur Blähschlammbildung führt.

Daraus folgt, daß am Anfang der Befüll- und Mischphasen eine relativ hohe Restnitratkonzentration vorhanden ist. Dies wirkt sich insofern auf die biologisch induzierte Phosphatrücklösung ungünstig aus, als daß zuerst die Restdenitrifikation auf Basis einer anoxischen Veratmung überwiegend der leicht abbaubaren BSB₅-Bestandteile erfolgt, die für die biologische Phosphatrücklösung unbedingt benötigt werden.

Der Grad der biologischen Phosphorelimination wird bei herkömmlichen SBR-Verfahren somit dadurch limitiert, daß die dafür erforderlichen BSB₅-Anteile zuerst/überwiegend für die Denitrifikation verbraucht werden.

Die schwerer abbaubaren BSB₅-Bestandteile, die nach der Denitrifikation noch vorhanden sind, können als solche direkt zur biologischen P-Rücklösung nicht genutzt werden. Sie müssen zuerst unter den dann vorliegenden anaeroben Bedingungen zu leichter abbaubaren BSB₅-Bestandteilen (z. B. niedermolekulare Fettsäuren) fermentiert werden. Diese anaerobe Fermentation selektiert jedoch fakultativ anaerobe Bakterien, die in vielen Fällen für die Blähschlammbildung verantwortlich gemacht werden. Insofern ergibt sich bei den herkömmlichen Verfahren das Problem, daß die Schaffung von Bedingungen zur biologischen P-Elimination gleichzeitig die Voraussetzung für die Entwicklung von überwiegend fadenförmigen fakultativ anaeroben Bakterien schafft, die für die Blähschlammbildung mitverantwortlich sind.

Der Erfindung liegt die Aufgabe zugrunde, ein Verfahren der eingangs genannten Art sowie eine Abwasserreinigungsanlage des angegebenen Aufbaus anzugeben, mit der eine möglichst vollständige Denitrifikation und eine möglichst weitgehende biologische P-Elimination sowie eine Vermeidung der Bläh- und Schwimmschlammbildung erreicht wird und gleichzeitig bzw. als direkte Folge davon die Betriebskosten überwiegend über die Minimierung der Energiekosten für die Belüftung, einer Reduktion der Abwasserabgabe, einer Minimierung/gänzlicher Wegfall der Fällmittelkosten für die chemische P-Elimination sowie einer Minimierung des Überschußschlammanfalls und die Investitionskosten über eine Reduktion des erforderlichen SBR-Reaktorvolumens reduziert werden können.

Zur Lösung dieser Aufgabe lehrt die Erfindung ein spezifisches Verfahren zur diskontinuierlichen Abwasserreinigung, bei dem das Abwasser aus einem Pufferbehälter in SBR-Reaktoren mit mindestens zwei internen Zyklen gefördert wird, im Rahmen der Befüllphase des/der ersten internen Zyklen vorgeklärtes Abwasser (also Überstand) aus dem Pufferbehälter (dieser dient während dieser Zeit somit auch als Vorklärbecken) in den SBR-Reaktor gefördert wird, und im Rahmen einer nächsten (ggf. letzten) Befüllphase eine wesentlich geringere Menge an aufkonzentriertem Abwasser (also Sedimentat) aus dem Pufferbehälter in den SBR-Reaktor gefördert wird, vorgeklärtes Abwasser gewonnen wird, indem aus dem oberen Bereich des Pufferbeckens Abwasser entnommen wird, während die Umwälzung abgestellt ist (somit handelt es sich um eine Abwasserfraktion, das weitestgehend von sedimentierbaren Anteilen, d. h. Primärschlamm, befreit ist, d. h. eine verhältnismäßig geringe BSB₅/CSB-Konzentration aufweist) und aufkonzentriertes Abwasser gewonnen wird, während die Umwälzung angestellt ist oder aus dem Bereich der Beckensohle des Pufferbeckens aufkonzentriertes Abwasser entnommen wird wiederum während die Umwälzung abgestellt ist, d. h. mit einer entsprechend höheren Primärschlammkonzentration, d. h. höheren BSB₅/CSB-Konzentration als das vorgeklärte Abwasser und auch das Rohabwasser.

In bestimmten Situationen mag es sinnvoll sein, gleichzeitig mit der Förderung von Sedimentat auch Überstand zuzugeben, z. B. um für die erforderliche Denitrifikation genügend BSB₅ bereitzustellen, wobei die zu denitrifizierende Menge nach dem ersten bzw. vorletztem Zyklus gemessen/abgeschätzt wird und darauf basierend die Menge/Art des aufkonzentrierten Abwasser für den letzten internen Zyklus bestimmt wird.

Eine direkte Messung kann beispielsweise über eine online Nitrat-Messung, eine indirekte über den Verlauf des Redoxpotentials und/oder des pH-Wertes (je mehr Stickstoff nitrifiziert wird, je stärker wird der pH-Wert absinken); eine Abschätzung kann über den Zeitpunkt und die Menge des zugeführten Abwassers erfolgen.

Die Erfindung geht von der Erkenntnis aus, daß bei ansonsten konstanten Rahmenbedingungen, insbesondere konstantem BSB₅/TS₀-Verhältnis, die BSB₅-Fracht linear proportional determiniert, wieviel Stickstoff aus dem Rohabwasser in den Überschußschlamm eingebaut wird. Das bedeutet konkret, daß beispielsweise bei einer Verdoppelung des BSB₅/N_{ges}-Verhältnisses über eine Verdoppelung der BSB₅-Fracht die doppelte Menge an Stickstoff in den Überschußschlamm eingebaut wird und eine entsprechend geringere Menge nitrifiziert wird bzw. nitrifiziert werden kann.

Die Erfindung geht weiter von der Erkenntnis aus, daß sehr viele Abwassertypen (und nur auf solche bezieht sich die vorliegende Erfindung), insbesondere häusliches Abwasser, mit Hilfe von Sedimentationsvorgängen in zwei Fraktionen aufgeteilt werden kann:

In einen Überstand, der sich im Vergleich zum Rohabwasser durch eine starke Reduktion der Bestandteile BSB₅, CSB sowie sedimentierbare Anteile bzw. TS₀ und eine sehr viel geringere Reduktion des Stickstoffanteils auszeichnet, sowie ein Sedimentat, das sich im Vergleich zum Rohabwasser durch eine starke Konzentrationserhöhung der Bestandteile BSB₅, CSB sowie sedimentierbare Anteile bzw. TS₀ und eine sehr viel geringere Konzentrationserhöhung des Stickstoffanteils kennzeichnet.

Erfindungsgemäß wird somit im Rahmen der/die ersten Befüllphase(n) vorgeklärtes Abwasser mit einem verhältnismäßig geringem BSB₅/N_{ges} Verhältnis in der SBR-Reaktor gefördert. Im Verlaufe dieser ersten Zyklen wird daher ein verhältnismäßig hoher Anteil des Gesamtstickstoffs nitrifiziert.

Dieser wird jedoch während der Befüll- und Mischphase des (der) letzten internen Zyklus (Zyklen) vollständig denitrifiziert, da durch die Zugabe einer entsprechenden (verhältnismäßig geringen) Menge an aufkonzentriertem Abwasser eine ausreichende Menge an BSB₅ zur Reduktion des Nitrates bereitgestellt wird/werden sollte. Da das BSB₅/N_{ges}-Verhältnis dieses aufkonzentrierten Abwassers bei gleichzeitig verhältnismäßig geringer N_{ges}-Menge verhältnismäßig hoch ist, wird ein im Vergleich zu den ersten Zyklen viel geringere Menge an Gesamtstickstoff im Verlaufe dieser letzten Belüftungsphase vor der Dekantierung nitrifiziert.

Am Ende der Belüftungsphase des letzten Zyklus wird somit eine Nitratstickstoffkonzentration vorliegen, die wesentlich unter denen herkömmlicher SBR-Verfahren liegt.

Zudem werden genau zu diesem Zeitpunkt, d. h. unmittelbar vor der Sedimentations- und Dekantierphase besonders günstige Schlammabsetzeigenschaften vorliegen, da im Rahmen der letzten Befüllphase der Belebtschlamm mit vergleichsweise viel Primärschlamm beschwert worden ist.

Da die Abwassermenge, die im Rahmen des letzten Zyklus den SBR-Reaktoren zugeführt wird, verhältnismäßig gering ist, ergeben sich auch Vorteile hinsichtlich des Energieaufwandes für die Belüftung, da somit auch annähernd energetisch optimale Einblastiefen während des bzw. der ersten internen Zyklen vorliegen.

Eine weitere Reduktion des Energieaufwandes für die Belüftung ergibt sich dadurch, daß mit der praktisch vollständigen Denitrifikation ein entsprechend größerer Nitratsauerstoff-Anteil zur Veratmung genutzt wird, wodurch sich eine entsprechende Reduktion des erforderlichen Sauerstoff-Anteils aus der Belüftung ergibt.

Ein dritter Vorteil der Belüftungsausrüstung ergibt sich aus der Tatsache, daß das erforderliche Denitrifikationsvolumen (im wesentlichen äquivalent zur Befüll- und Mischphase des letzten internen Zyklus) im Vergleich zu herkömmlichen Verfahren aus kinetischen Gründen (sowohl höhere NO₃- als auch BSB₅-Konzentration am Anfang der Denitrifikationsphase) geringer ist. Da das Nitrifikationsvolumen somit verhältnismäßig größer wird, kann die erforderliche Belüftungsausrüstung entsprechend kleiner ausgelegt werden.

Es versteht sich, daß die gesetzmäßige Abfolge des An- bzw. Ausstellens der Umwälzung im Pufferbecken praktisch zwangsläufig eine Hydrolyse/Vorversäuerung des Rohabwasser/Primärschlammes bewirkt.

Das Ausmaß der Hydrolyse/Vorversäuerung wird dabei entscheidend von der durchschnittlichen Aufenthaltsdauer des Primärschlammes im Pufferbehälter bestimmt; um eine weitgehende Hydrolyse/Vorversäuerung zu erzielen, sollte vorzugsweise eine Aufenthaltsdauer von etwa drei Tagen eingestellt werden. Dieses läßt sich je nach Bedarf einstellen mit den gewünschten Auswirkungen auf die oben beschriebene Fraktionierung des Abwassers zwecks weitergehender Denitrifikation.

Dabei ist einleuchtend, daß das erforderliche Ausmaß der Fraktionierung von dem BSB₅/N_{ges}-Verhältnis in dem Pufferbehälter zufließendem Rohabwasser bestimmt werden sollte: Je geringer das Verhältnis wird, desto größer wird die Erfordernis einer weitergehenden Fraktionierung.

Diesbezüglich geht die Erfindung desweiteren von der Erkenntnis aus, daß die Effektivität der biologischen Phosphorelimination sehr wesentlich davon bestimmt wird, daß während der anaeroben Phase (hier die Befüll- und Mischphase des ersten internen Zyklus) vorversäuertes Abwasser mit einer möglichst geringen Nitratkonzentration vorliegt. Genau dieses Verhältnis wird bei Anwendung des Verfahrens nach der Erfindung herbeigeführt.

Der Vorteil dieser Verfahrensführung besteht darin, daß schon anaerob vorfermentiertes Rohabwasser aus dem Pufferbecken in die überwiegend anaerobe (und nicht anoxische) Phase der SBR-Reaktoren geführt wird. Somit sind positive Selektionsbedingungen für die nicht fermentierfähigen Bio-P-Bakterien gegeben, die unter anaeroben Bedingungen niedermolekulare (und überwiegend nicht weiter fermentierbare) Fettsäuren aufnehmen und speichern bei gleichzeitiger Phosphat-Rücklösung und negative Selektionsbedingungen für die oft zur Fadenbildung und somit Blähschlammbildung neigenden fermentierfähigen Bakterien.

Bei dem erfindungsgemäßen Verfahren kann damit eine weit höhere biologische Phosphat-Eliminationsrate erreicht werden als mit herkömmlichen Verfahren. Als direkte Folge davon ergibt sich ein geringerer Fällmittelbedarf (dieser kann gegebenenfalls sogar - abhängig von der Rohabwasserzusammensetzung - vollständig entfallen), ein geringerer Überschußschlammanfall und als Folge davon ein höheres Schlammalter, das eine Reduktion des erforderlichen SBR-Reaktorvolumens ermöglicht.

Nach einer bevorzugten Ausführungsform der Erfindung wird die Umwälzung im Pufferbecken kurz vor Beginn der Befüllphase des letzten internen Zyklus angestellt. Diese Ausführungsform wird vorzugsweise dann angewandt, wenn keine getrennte Stabilisierung der Überschußschlämme beabsichtigt ist, damit der gesamte Primärschlamm der biologischen Behandlung in den SBR-Reaktoren zugeführt werden kann.

Nach einer weiteren bevorzugten Ausführungsform der Erfindung erfolgt die Befüllung des letzten internen Zyklus mit überwiegend abgesetztem Primärschlamm (die Umwälzung im Pufferbehältler wird daher schon eine gewisse Zeit vor dem Beginn dieser letzten Befüllphase abgestellt). Vorzugsweise wird dabei nur die für eine vollständige und verhältnismäßig schnelle Denitrifikation erforderliche Primärschlammenge (sowie ggf. zusammen mit etwas Überstand) in die SBR-Reaktoren gefördert. Der restliche Primärschlammanfall (wie auch der Überschußschlamm aus den SBR-Reaktoren) wird zweckmäßigerweise einer anaeroben Stabilisierung, beispielsweise in einem Faulturm, zugeführt. Insbesondere mit dieser Ausführungsform des erfindungsgemäßen Verfahrens sind erhebliche Baukosteneinsparungen möglich, da ausschließlich die für die erforderliche Denitrifikation erforderliche Primärschlammzugabe zu einer Minimierung der Gesamtfrachtzufuhr (und somit erforderliches Volumen) zu den SBR-Reaktoren führt.

Diese Ausführungsform eröffnet auch die Möglichkeit, anfallendes Trüb- und Filtratwasser aus der anaeroben Schlammbehandlung mit einem üblicherweise sehr geringem BSB₅/N_{ges}-Verhältnis sehr effektiv mitzubehandeln:

Je nach der Höhe der N_{ges}-Fracht des Trüb-/Filtratwassers wird dieses während der Befüllphase des ersten Zyklus oder kontinuierlich während der Belüftungsphase des ersten Zyklus dem SBR-Reaktor zugeführt (wenn die N_{ges}-Fracht auch des Rohabwassers sehr hoch ist, sollte dieser Zugabemodus gewählt werden, um eine zu hohe Nitritbildung zu unterbinden). So wird gewährleistet, daß die gesamte N_{ges}-Fracht des Trüb-/Filtratwassers sowohl vollständig nitrifiziert als auch vollständig denitrifiziert werden kann.

Nach einer anderen bevorzugten Ausführungsform der Erfindung erfolgt die Befüllung des letzten internen Zyklus mit überwiegend abgesetztem Primärschlamm (die Umwälzung im Pufferbehälter wird daher schon eine gewisse Zeit vor dem Beginn dieser letzten Befüllphase abgestellt). Dabei wird jedoch, allerdings bei mehreren Gesamtzyklen möglichst gleichmäßig verteilt, der ganze anfallende Primärschlamm den SBR-Reaktoren zugeführt, so daß als Überschußschlamm ausschließlich der Sekundärschlamm aus den SBR-Reaktoren anfällt.

Gegenstand der Erfindung ist auch eine Abwasserreinigungsanlage für die Durchführung des eingangs erläuterten Verfahrens, die mit einem Rohabwasserzulauf, einer mechanische Vorreinigung, einer Vorlage-/Misch- und Ausgleichsstufe bestehend aus zumindest einem Pufferbecken und SBR-Reaktoren, wobei das/die Pufferbecken mit den SBR-Reaktoren verbunden und der Rohabwasserzulauf über die mechanische Reinigungsstufe in die/das Pufferbecken führt, wobei im Rahmen der ersten internen Zyklen nur vorgeklärtes Abwasser aus den Pufferbecken in die SRB-Reaktoren gefördert wird und im Rahmen des letzten internen Zyklus nur aufkonzentriertes Abwasser aus den Pufferbecken in die SBR-Reaktoren gefördert wird und ggf. eine adäquate Meßeinrichtung die Menge/Art des aufkonzentrierten Abwassers bestimmt, die in die SBR-Reaktoren gefördert wird, versehen ist.

Im folgenden wird die Erfindung anhand von zwei Ausführungsbeispielen darstellenden Zeichnungen ausführlich erläutert. Es zeigen:
- Fig. 1: Das Schema einer erfindungsgemäßen Abwasserreinigungsanlage zur Durchführung des erfindungsgemäßen Verfahrens als Lageplanausschnitt,
- Fig. 2: eine schematische Darstellung nach einem ersten Ausführungsbeispiel eines erfindungsgemäßen Gesamtzyklusverlaufes,
- Fig. 3: eine schematische Darstellung nach einem zweiten Ausführungsbeispiel eines erfindungsgemäßen Gesamtzyklusverlaufes.

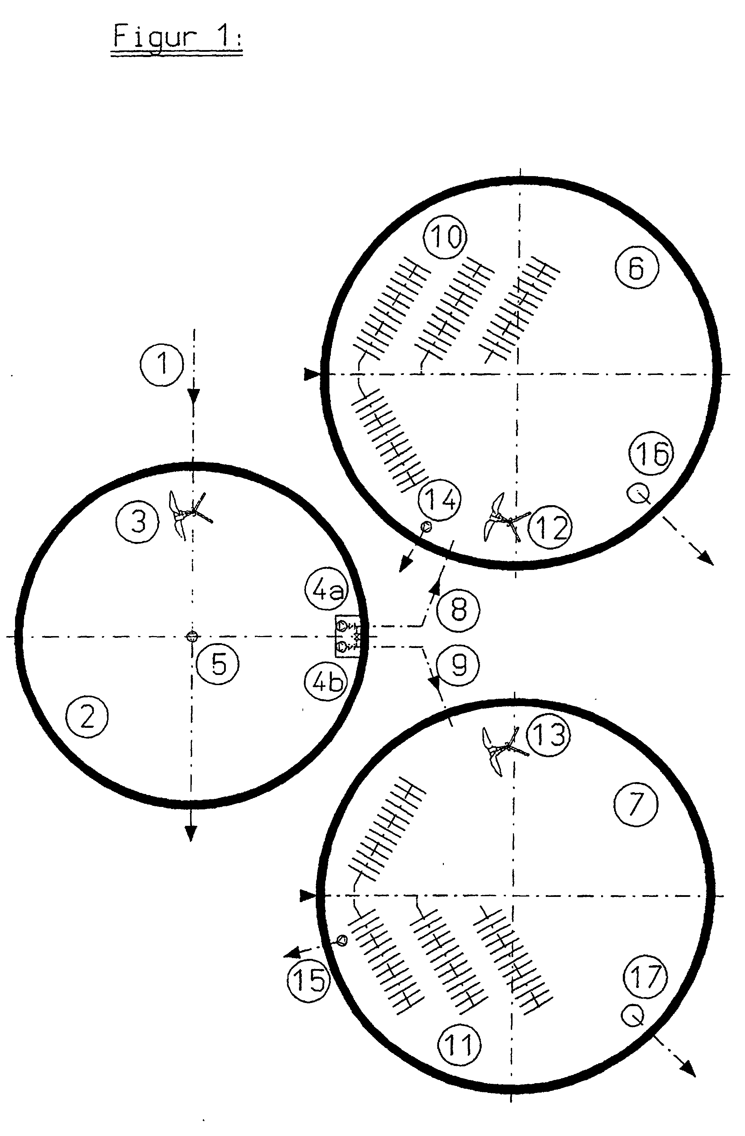

In der Fig. 1 ist eine erfindungsgemäße Abwasserreinigungsanlage zur Durchführung des erfindungsgemäßen Verfahrens zur Abwasserreinigung dargestellt. Es handelt sich um eine Anlage mit einem Pufferbehälter und 2 SBR-Reaktoren. Die Art und Weise der mechanischen Vorbehandlung und ggf. der Schlammbehandlung ist bezogen auf die Patentansprüche nicht relevant und deshalb hier auch nicht dargestellt.

Dargestellt ist der Rohabwasserzulauf 1 zum Pufferbehälter, der Pufferbehälter 2 mit einem Umwälzrührer 3, Beschickungspumpen 4a und 4b sowie eine optional zu betätigende Primärschlammentnahmepumpe 5.

Die SBR-Reaktoren 6 und 7 werden über die Zuführleitungen 8 und 9 aus dem Pufferbehälter mit fraktioniertem Rohabwasser beschickt. Die Belüftung 10 und 11 ist intermittierend betreibbar. Die Umwälzeinrichtungen 12 und 13 der SBR-Reaktoren sind mindestens während der Sedimentations- und Dekantierphasen abgestellt. Die Überschußschlammpumpen 14 und 15 fördern den Überschußschlamm vorzugsweise am Ende der Sedimentationsphase aus den SBR-Reaktoren. Über die Klarwasserabzugsvorrichtungen 16 und 17 erfolgt der Klarwasserabzug ggf. in den (optionalen) Klarwasserzwischenspeicher.

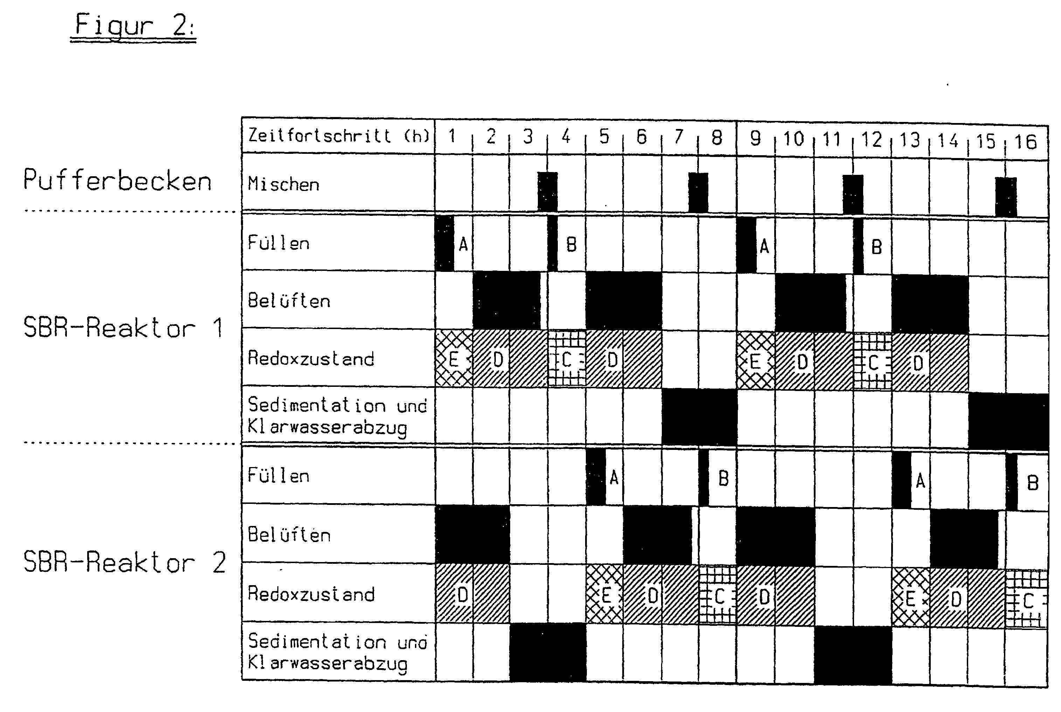

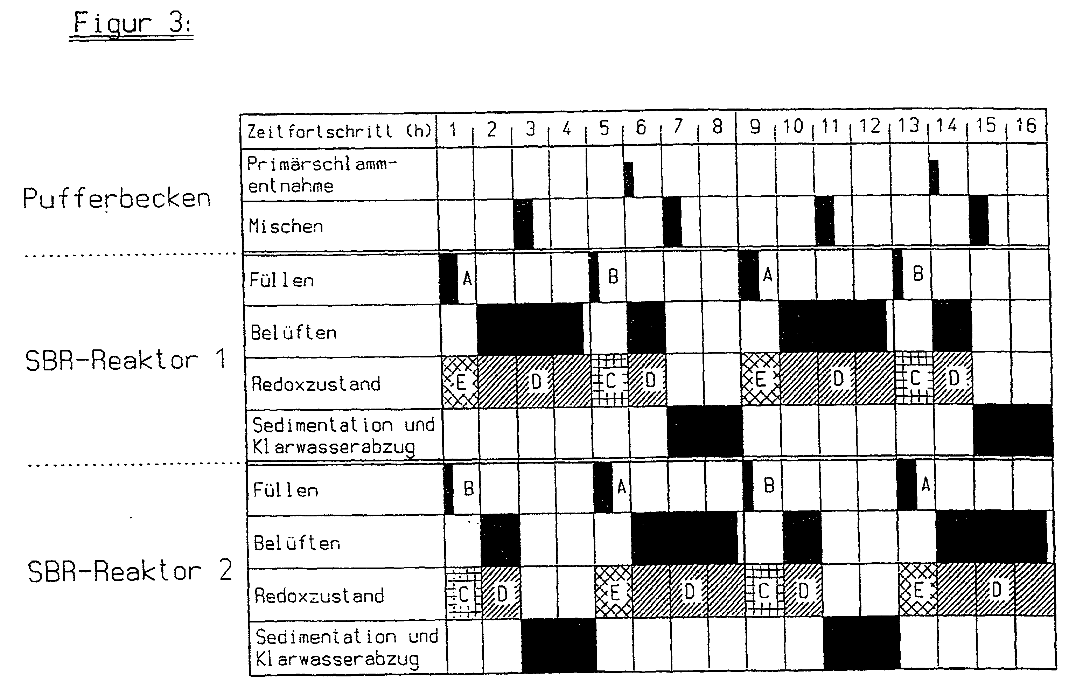

In den Fig. 2 und 3 sind zwei Ausführungsbeispiele beispielhafter Gesamtzyklusstrategien entlang einer Zeitachse dargestellt. In beiden Fällen beträgt die Gesamtzyklusdauer für beide SBR-Reaktoren 8 h mit 2 internen Zyklen, sie kann jedoch auch je nach Rohabwasserzusammensetzung, Menge und Reinigungsziel kürzer oder länger sein und mehrere interne Zyklen beinhalten. Bei diesen Beispielen beträgt die Asynchronität 4 h, sie ist jedoch beliebig wählbar und im wesentlichen abhängig von der Abwassermenge, der Anzahl der SBR-Reaktoren, der Art und Weise der Bereitstellung von aufkonzentriertem Abwasser sowie der Dauer der internen Zyklen und die zeitliche Überschneidung der internen Zyklen der SBR-Reaktoren.

Die Asynchronität muß beispielsweise darauf ausgerichtet werden, daß nicht gleichzeitig Überstand in den einen Reaktor und aufkonzentriertes Abwasser über das Anstellen der Umwälzeinrichtung im Pufferbehälter in den anderen Reaktor gefördert werden kann.

Nach Ausführungsbeispiel 1, Fig. 2, erfolgt die Bereitstellung der aufkonzentrierten Abwasserfraktion durch Anstellen der Umwälzeinrichtung 3 im Pufferbehälter 2 kurz vor dem Befüllvorgang des letzten internen Zyklus. Die Beschickungspumpen 4a oder 4b fördern dann die mit Primärschlamm hoch angereicherte Abwasserfraktion B in einen SBR-Reaktor. Während der nächsten ca. 1 h erfolgt dann unter anoxischen Bedingungen C die vollständige Denitrifikation. Am Ende dieser Phase mag unter teilweise anaeroben Bedingungen eine gewisse P-Rücklösung stattfinden, eine Steuerung/Regelung dieses Prozesses ist jedoch für die Erfindung irrelevant. Während der nachfolgend stattfindenden ca. 2 h andauernden Belüftungsphase erfolgt unter oxischen Bedingungen D die Veratmung des Rest-BSB sowie die Aufnahme des restlichen gelösten Phosphates und die Nitrifikation des verhältnismäßig geringen Stickstoffanteiles.

Nach den sich anschließenden Sedimentations-, Dekantierund Überschußschlammabzugsphasen beginnt der erste interne (und gleichzeitig neue Gesamt-)Zyklus damit, daß die Beschickungspumpen 4a oder 4b eine gering belastete Überstandsfraktion A aus dem Pufferbehälter 2 in einen SBR-Reaktor fördern.

Die Beschickungspumpen können mit einer Mehrzahl von Leitungen in verschiedenen Höhen am Pufferbehälter 2 angeschlossen werden, um so wahlweise Überstand oder Sedimentat zu fördern, je nachdem, welche der Leitungen mit einem entsprechenden Schieber verschlossen bzw. geöffnet ist.

Aus Fig. 2 ist erkennbar, daß knapp 1 h vor Entnahme dieser Überstandsfraktion die Umwälzeinrichtung im Pufferbehälter abgestellt wurde. Dies wirkt sich auf die biologische P-Elimination insofern sehr günstig aus, als daß die Überstandsfraktion dann zwar eine verhältnismäßig geringe BSB₅-Gesamtkonzentration aufweist, der leicht abbaubare BSB₅-Anteil jedoch verhältnismäßig hoch ist, da dieser Anteil während der Umwälzung in die Überstandsfraktion A ausgewaschen wurde. Während der nächsten ca. 1 h erfolgt dann unter ideellen, praktisch ausschließlich anaeroben Bedingungen E die Rücklösung des während der Aerob-Phasen biologisch aufgenommenen Phosphates. Während der nachfolgend stattfindenden ca. 2 h andauernden Belüftungsphase erfolgt unter oxischen Bedingungen D die Veratmung des Rest-BSB sowie die biologische Aufnahme des mit dem Rohabwasser zugeführten und des in der vorangegangenen anaeroben Phase freigesetzten Phosphates und die vollständige Nitrifikation des verhältnismäßig hohen Stickstoffanteiles. Nach Beendigung der Belüftung erfolgt wiederum ein Befüllvorgang mit einer hochangereicherten Abwasserfraktion B (siehe oben).

Abweichend von diesem Ausführungsbeispiel sind erfindungsgemäß auch mehr als zwei interne Zyklen möglich; im Rahmen der biologischen P-Elimination über die Beschickung mit Überstand ist jedoch nur ein interner Zyklus sinnvoll, während im Rahmen der Denitrifikation über die Beschickung mit Desimentat durchaus mehrere aufeinanderfolgende interne Zyklen hilfreich/sinnvoll sein können, insbesondere wenn eine nur mäßige Fraktionierung möglich ist und eine sehr weitgehende Denitrifikation gefordert ist.

Desweiteren ist es erfindungsgemäß auch möglich (und je nach Abwasserzusammensetzung auch höchst sinnvoll) unterschiedlich lange interne Zyklen zu wählen oder über eine entsprechende online Steuerung entstehen zu lassen.

Nach Ausführungsbeispiel 2, Fig. 3 erfolgt die Bereitstellung der aufkonzentrierten Abwasserfraktion B dadurch, daß aus dem Bereich der Beckensohle des Pufferbeckens befüllt wird, während die Umwälzung abgestellt ist. Diese Abwasserfraktion besteht somit im wesentlichen aus sedimentiertem Primärschlamm. Beispielsweise die Beschickungspumpe 4a fördert den Primärschlamm in einen SBR-Reaktor.

Während der nächsten ca. 1 h erfolgt dann unter anoxischen Bedingungen C die vollständige Denitrifikation. Während der nachfolgend stattfindenden ca. 1 h andauernden Belüftungsphase erfolgt unter oxischen Bedingungen D die Veratmung des Rest-BSB sowie die Aufnahme des ggf. rückgelösten Phosphates und die Nitrifikation eines verhältnismäßig geringen Stickstoffanteiles. Nach den sich anschließenden Sedimentations-, Dekantier- und Überschußschlammabzugsphasen beginnt der erste interne (und gleichzeitig neue Gesamt-)Zyklus damit, daß die Beschickungspumpe 4b eine gering belastete Überstandsfraktion A aus dem Pufferbehälter 2 in einen SBR-Reaktor fördert.

Aus Fig. 3 ist zu erkennen, daß knapp 2 h vor Entnahme dieser Überstandsfraktion die Umwälzeinrichtung im Pufferbehälter abgestellt wurde. Dies wirkt sich entsprechend Ausführungsbeispiel 1 auf die biologische P-Elimination insofern sehr günstig aus, als daß die Überstandsfraktion dann zwar eine verhältnismäßig geringe BSB₅-Gesamtkonzentration aufweist, der leicht abbaubare BSB₅-Anteil jedoch verhältnismäßig hoch ist, da dieser Anteil während der Umwälzung in die Überstandsfraktion A ausgewaschen wurde. Während der nächsten ca. 1 h erfolgt dann unter idealen, praktisch ausschließlich anaeroben Bedingungen E die Rücklösung des während der Aerob-Phasen biologisch aufgenommenen Phosphates. Während der nachfolgend stattfindenden ca. 3 h andauernden Belüftungsphase erfolgt unter oxischen Bedingungen D die Veratmung des Rest-BSB sowie die biologische Aufnahme des mit dem Rohabwasser zugeführten und des in der vorangegangenen anaeroben Phase freigesetzten Phosphates und die vollständige Nitrifikation des verhältnismäßig hohen Stickstoffanteiles. Nach Beendigung der Belüftung erfolgt wiederum ein Befüllvorgang mit einer hochangereicherten Abwasserfraktion B (siehe oben).

Desweiteren ist in Fig. 3 die Spalte Primärschlammentnahme hinzugefügt worden, um zu kennzeichnen, daß vorzugsweise bei diesem Ausführungsbeispiel eine getrennte Überschußschlammstabilisierung erfolgt. Dieses ist jedoch durchaus auch nach Ausführungsbeispiel 1 möglich.

An einem konkreten Beispiel wird im folgenden das erfindungsgemäße Verfahren nach Ausführungsbeispiel 1 verglichen mit einem herkömmlichen Verfahren.

Als konkretes Beispiel wird eine 10.000 Einwohnerwerte (= EW) SBR-Anlage (mit zwei SBR-Reaktoren und einem Pufferbehälter) mit simultaner aerober Schlammstabilisierung (Schlammalter 25 d) gewählt mit folgenden Zulaufmengen und Frachten:

| | |
|---|---|
| Durchschn. Tagesabwassermenge | 3.000 m³/d = 188 m³/h |
| maximale Tagesabwassermenge | 4.500 m³/d = 313 m³/h |
| TS₀: 700 kg/d in der Spitze | 290 mg/l |
| BSB₅: 600 kg/d in der Spitze | 250 mg/l |
| N_{ges}: 120 kg/d in der Spitze | 60 mg/l |

Nach dem erfindungsgemäßen Verfahren mit einer Gesamtzykluszeit von 8 h, zwei internen Zyklen mit je 3 h und einem maximalen Gesamtvolumenaustauschverhältnis von 35 % ergeben sich für die beiden Befüllvorgänge:
1. Befüllvorgang mit Überstand ca. 550 m³.

| | |
|---|---|
| BSB₅ | ca. 165 mg/l = 91 kg |
| TS₀ | ca. 125 mg/l = 69 kg |
| N_{ges} | ca. 54 mg/l = 30 kg |

2. Befüllvorgang mit Konzentrat ca. 100 m³.

| | |
|---|---|
| BSB₅ | ca. 715 mg/l = 72 kg |
| TS₀ | ca. 1.160 mg/l = 116 kg |
| N_{ges} | ca. 90 mg/l = 9 kg |

Unter Berücksichtigung der Gesamtvolumenaustauschrate mit 35 % sowie ca. 0,045 kg Stickstoff je kg BSB₅ für den Aufbau der Biomasse ergibt sich somit am Zyklusende eine Nitrat-N-Konzentration von ca. 3,0 mg/l.

Nach dem herkömmlichen Verfahren wird eine Gesamtzykluszeit von 4 h gewählt mit nur einem internen Zyklus (vom Ergebnis her identisch mit einer Gesamtzykluszeit von 8 h und zwei gleich langen internen Zyklen) und somit einer maximalen Volumenaustauschrate von 18 %. Wiederum unter Berücksichtigung von ca. 0,045 kg Stickstoff je kg BSB₅ für den Aufbau der Biomasse ergibt sich somit am Zyklusende eine Nitrat-N-Konzentration von ca. 8,6 mg/l.

## Patentansprüche

1. Verfahren zur diskontinuierlichen Abwasserreinigung mit differenzierten internen Zyklusstrategien, **dadurch gekennzeichnet, daß**
- das Abwasser aus einem zur Rohabwasserfraktionierung dienenden, mit einer Umwälzeinrichtung ausgerüsteten Pufferbehälter (2) in mindestens einen SBR-Reaktor (6 oder 7) mit mindestens zwei internen Zyklen gefördert wird,
- während der Befüllphase des (der) ersten internen Zyklus (Zyklen) ein vorgeklärtes Abwasser, das einen gering belasteten Überstand bildet, aus dem Pufferbehälter (2) in der SBR-Reaktor (6 oder 7) gefördert wird,
- wenigstens während der letzten Befüllphase des Gesamtzyklus eine wesentlich geringere Menge an aufkonzentriertem Abwasser im wesentlichen als Sedimentat aus dem Pufferbehälter (2) in den SBR-Reaktor (6 oder 7) gefördert wird,
- bei abgestellter Umwälzung aus dem oberen Bereich des Pufferbeckens (2) vorgeklärtes Abwasser entnommen wird,
- bei angestellter Umwälzung aufkonzentriertes Abwasser aus dem Pufferbecken (2) entnommen wird,
wobei ein hoher Gehalt an Sedimentat mitgefördert wird, oder aufkonzentriertes Abwasser gewonnen wird, indem aus dem Bereich der Beckensohle des Pufferbeckens (2) Abwasser entnommen wird, und somit praktisch ausschließlich Sedimentat gefördert wird (ggf. zusammen mit einer gewissen Überstandsmenge), und
- die zu denitrifizierende Menge an Nitrat nach dem ersten bzw. vorletzten Zyklus direkt oder indirekt ermittelt wird und darauf basierend die Menge/Art des aufkonzentrierten Abwassers für den letzten internen Zyklus ermittelt wird.

2. Verfahren nach Anspruch 1, **dadurch gekennzeichnet, daß** die Befüll- und ggf. auch die anschließende reine Umwälzphase des ersten internen Zyklus überwiegend zur biologischen P-Elimination genutzt wird und eine Steuerung/Regelung der erforderlichen Länge dieser Phase über entsprechende Meßvorrichtung erfolgt.

3. Verfahren nach den Ansprüchen 1 und 2, **dadurch gekennzeichnet, daß** ca. 1 - 2 h vor dem Befüllvorgang mit Überstand die Umwälzung (3) im Pufferbecken (2) kurzzeitig angestellt wird, um die leicht abbaubaren BSB₅-Bestandteile auszuwaschen.

4. Verfahren nach Anspruch 1, **dadurch gekennzeichnet, daß** die Befüll- und ggf. auch die anschließende reine Umwälzphase des/der letzten internen Zyklen zur Denitrifikation genutzt wird und eine Steuerung/Regelung der erforderlichen Länge dieser Phase über entsprechende Meßvorrichtungen erfolgt.

5. Verfahren nach den Ansprüchen 1 und 4, **dadurch gekennzeichnet, daß** der gesamte im Pufferbecken (2) anfallende Primärschlamm (ggf. zeitversetzt) zur simultanen Schlammstabilisierung in den/die SBR-Reaktor(en) gefördert wird.

6. Verfahren nach den Ansprüchen 1 und 4, **dadurch gekennzeichnet, daß** nur der für die Denitrifikation erforderliche Primärschlammanteil zeitversetzt in den/die SBR-Reaktor(en) gefördert wird, wodurch eine getrennte Schlammstabilisierung erfolgt.

7. Verfahren nach Anspruch 1, **dadurch gekennzeichnet, daß** während der Befüll- und/oder Belüftungsphase des/der ersten (nicht also letzten) internen Zyklus in den/die SBR-Reaktor(en) Trüb-/Filtratwasser gefördert wird.

8. Abwasserreinigungsanlage für die Durchführung eines Verfahrens mit den Merkmalen der Ansprüche 1 bis 7, mit
- einem Rohabwasserzulauf (1),
- einer mit einer Umwälzungseinrichtung versehenen Pufferstufe (2), die aus mindestens einem mit Beschickungspumpen versehenen Pufferbecken besteht,
- einer Reaktorstufe (6 und 7)mit zumindest einem SBR-Reaktor,
wobei die Beschickungspumpe(n) (4a; 4b) in verschiedenen Höhen am Pufferbehälter (2) anschließbar ist/sind¹.

## Claims

1. Process for discontinuous waste water purification with differentiated internal cycle strategies, **characterized in that**
- the waste water is fed from a buffer tank (2) used for raw sewage fractionation and equipped with a circulating device into at least one SBR reactor (6 or 7) with at least two internal cycles,
- during the filling phase of the first internal cycle a preclarified waste water forming a slightly loaded supernatant fraction is fed from the buffer tank (2) into the SBR reactor (6 or 7),
- at least during the final filling phase of the overall cycle a much smaller quantity of concentrate waste water substantially in the form of sedimentate is fed from the buffer tank (2) to the SBR reactor (6 or 7),
- with circulation stopped preclarified waste water is taken from the upper region of the buffer tank (2),
- with the circulation started concentrated waste water is removed from the buffer tank (2), a high sedimentate content also being delivered, or concentrated waste water is obtained **in that** waste water is taken from the base of the buffer tank (2) and consequently substantially exclusively sedimentate is delivered (optionally together with a certain supernatant quantity) and
- the nitrate quantity to be denitrified following the first or penultimate cycle is directly or indirectly determined and on the basis thereof the quantity/nature of the concentrated waste water for the final internal cycle is determined.

2. Process according to claim 1, **characterized in that** the filling phase and optionally also the following purely circulation phase of the first internal cycle is mainly used for biological P elimination and the necessary length of this phase is controlled by means of a corresponding measuring device.

3. Process according to claims 1 and 2, **characterized in that** roughly 1 to 2 hours prior to the filling process with supernatant fraction the circulation device (3) in the buffer tank (2) is briefly started in order to wash out the readily degradable BSB5 constituents.

4. Process according to claim 1, **characterized in that** the filling phase and optionally also the following purely circulation phase of the last internal cycles is used for denitrification and the necessary length of this phase is controlled by means of corresponding measuring devices.

5. Process according to claims 1 and 4, **characterized in that** all the primary sludge obtained in the buffer tank (2) (optionally in time-displaced manner) is delivered to the SBR reactor or reactors for simultaneous sludge stabilization.

6. Process according to claims 1 and 4, **characterized in that** only the primary sludge fraction required for denitrification is delivered in time-displaced manner to the SBR reactor or reactors, so that there is a separate sludge stabilization.

7. Process according to claim 1, **characterized in that** during the filling and/or aeration phase of the first (i.e. not the last) internal cycle cloudy/filtrate water is delivered to the SBR reactor or reactors.

8. Waste water purification plant for performing a process having the features of claims 1 to 7 with a raw sewage feed (1), a buffer stage (2) provided with a circulating device and comprising at least one buffer tank equipped with charging or feed pumps and a reactor stage (6 and 7) with at least one SBR reactor, the charging pump or pumps (4a; 4b) being connectable at different levels to the buffer tank (2).

## Revendications

1. Procédé pour l'épuration discontinue d'eaux usées avec des stratégies de cycles internes différenciées, **caractérisé en ce que**
- les eaux usées sont conduites d'un bassin tampon (2) servant au fractionnement des eaux usées brutes, équipé d'un dispositif de circulation, dans au moins un réacteur SBR (6 ou 7)à au moins deux cycles internes,
- pendant la phase de remplissage du ou des premiers cycles internes, des eaux usées pré-décantées, formant un surnageant peu chargé, sont conduites du bassin tampon (2) dans le réacteur SBR (6 ou 7),
- au moins pendant la dernière phase de remplissage du cycle complet, une quantité essentiellement faible d'eaux usées concentrées est conduite, essentiellement en tant que sédiment, du bassin tampon (2) dans le réacteur SBR (6 ou 7),
- la circulation étant à l'arrêt, des eaux usées, pré-décantées, son prélevées à partir de la zone supérieure du bassin tampon (2),
- la circulation étant active, des eaux usées concentrées sont prélevées du bassin tampon (2), grâce à quoi une grande quantité de sédiments est entraînée simultanément, ou des eaux usées concentrées sont extraites en prélevant des eaux usées de la zone du fond du bassin tampon (2), et des sédiments sont ainsi convoyés pratiquement exclusivement (le cas échéant, en même temps qu'une certaine quantité de surnageant), et
- la quantité de nitrate à dénitrifier est déterminée directement ou indirectement, après le premier resp. l'avant-dernier cycle et, sur cette base, la quantité / le type d'eaux usées concentrées est déterminé pour le dernier cycle interne.

2. Procédé selon la revendication 1, **caractérisé en ce que** la phase de remplissage et aussi, le cas échéant, la phase de circulation pure du premier cycle interne y faisant suite, servent essentiellement à l'élimination biologique de P et une commande / régulation de la durée nécessaire de cette phase est effectuée par l'intermédiaire d'un dispositif de mesure adéquat.

3. Procédé selon les revendications 1 et 2, **caractérisé en ce que** 1 à 2 heures environ avant l'opération de remplissage avec du surnageant, la circulation (3) dans le bassin tampon (2) est brièvement mise en marche afin d'enlever par lavage les éléments de DBO5 facilement dégradables.

4. Procédé selon la revendication 1, **caractérisé en ce que** la phase de remplissage et aussi, le cas échéant, la phase de circulation pure du / des derniers cycles internes est utilisée pour la dénitrification et une commande / régulation de la durée nécessaire de cette phase est effectuée par l'intermédiaire de dispositifs de mesure adéquats.

5. Procédé selon les revendications 1 et 4, **caractérisé en ce que** la totalité de la boue primaire (le cas échéant accumulée au cours du temps), produite dans le bassin tampon (2) est conduite, pour stabilisation simultanée de la boue, dans le / les réacteurs SBR.

6. Procédé selon les revendications 1 et 4, **caractérisé en ce que** seule la partie de boue primaire nécessaire à la dénitrification, accumulée au cours du temps dans le / les réacteurs SBR, est transportée, ce par quoi une stabilisation séparée des boues est effectuée.

7. Procédé selon la revendication 1, **caractérisé en ce que**, pendant la phase de remplissage et / ou la phase d'aération du/ des premiers (mais pas du dernier) cycles internes, de l'eau boueuse / de l'eau de filtration est conduite dans le / les réacteurs SBR.

8. Installation d'épuration d'eaux usées pour l'exécution d'un procédé présentant les caractéristiques des revendications 1 à 7, avec
- une amenée d'eaux usées brutes (1),
- un étage tampon (2) pourvu d'un système de circulation, composé d'au moins un bassin tampon pourvu de pompes d'alimentation,
- un étage réacteur (6 et 7) avec au moins un réacteur SBR,
la / les pompes d'alimentation (4a ; 4b) pouvant être raccordées, à différentes hauteurs, au bassin tampon (2).
